Europäisches Patentamt

European Patent Office

Office européen des brevets

(11) Numéro de publication: **0 176 449**
**A1**

## (12) DEMANDE DE BREVET EUROPEEN

(21) Numéro de dépôt: 85420147.2

(22) Date de dépôt: 02.08.85

(51) Int. Cl.⁴: **G 07 C 5/00**
**G 06 K 11/00**

(30) Priorité: 09.08.84 FR 8412895

(43) Date de publication de la demande:
02.04.86 Bulletin 86/14

(84) Etats contractants désignés:
AT BE CH DE GB IT LI NL SE

(71) Demandeur: Gaso, Philippe
62 avenue Lacassagne
F-69003 Lyon(FR)

(72) Inventeur: Gaso, Philippe
62 avenue Lacassagne
F-69003 Lyon(FR)

(74) Mandataire: Bratel, Gérard et al,
Cabinet GERMAIN & MAUREAU Le Britannia - Tour C 20,
boulevard E. Deruelle
F-69003 Lyon(FR)

(54) Lecteur-analyseur de disques tachygraphiques.

(57) Cet appareil permet de recueillir, en vue de leur traitement automatique, les informations enregistrées sur les disques de contrôle des véhicules "poids lourds".

Un plateau (1), entraîné en rotation par un moteur (4), reçoit le disque (2). Un bras de lecture (7), déplaçable en direction tangentielle le long de guides (5,14), est muni d'un capteur optique (8) qui est automatiquement positionné au-dessus de la piste circulaire du disque (2) qui doit être explorée. Des moyens (21,22) permettent de détecter automatiquement le passage du disque (2) par les positions "0 heure" ou "24 heures".

FIG.1

EP 0 176 449 A1

"Lecteur-analyseur de disques tachygraphiques"

La présente invention concerne un appareil lecteur enregistreur de disques tachygraphiques. Cet appareil permet de recueillir, en vue de leur traitement automatique, les informations enregistrées sur les disques de contrôle qui équipent de façon habituelle les véhicules automobiles de la catégorie "poids lourds" et sur lesquels s'inscrivent automatiquement des indications telles que : la vitesse, la distance parcourue, les temps de travail du chauffeur, les temps de conduite effective. Ces indications sont inscrites sur une pluralité de pistes circulaires concentriques du disque, dont la rotation d'un tour complet correspond à une durée de 24 heures.

En dehors des procédés de traitement purement manuel des disques tachygraphiques, procédés évidemment peu rapides, peu précis et comportant des risques d'erreur, on connaît déjà certains appareils automatiques pour la lecture et l'analyse de ces disques tachygraphiques. Dans un appareil particulier (voir brevet français 2 339 210), l'exploration d'un disque est effectuée en plaçant le disque sur un plateau entraîné en rotation, et en projetant l'image correspondant à un rayon du disque sur une ligne de diodes photosensibles fixes, ceci par l'intermédiaire d'un système de lentilles grossissant. Cet appareil exige de très nombreuses diodes si l'on veut obtenir une résolution suffisamment fine, d'où une réalisation complexe et ne garantissant pas, pour autant, une insensibilité aux parasites.

La lecture correcte des indications inscrites sur les disques tachygraphiques, et l'exploitation automatique de ces informations, exigent aussi que soient exactement repérés les temps et notamment un instant origine. La seule solution actuellement connue consiste à réaliser un repère sous la forme d'un trait noir très appuyé, tracé suivant le rayon du disque correspondant à l'instant "0 heure" (voir brevet français 2 126 046). Ce procédé nécessite une modification des disques habituels, et il est la cause de difficultés ou d'erreurs de lecture du fait que le trait sombre qui suit un rayon recoupe les pistes circulaires qui portent les inscriptions à lire.

La présente invention élimine l'ensemble de ces inconvénients, en fournissant un appareil dont les moyens d'exploration permettent de suivre exactement les pistes circulaires des disques portant les inscriptions à lire et à analyser, ces moyens étant mobiles et se positionnant

2

automatiquement sur chaque piste à explorer.

A cet effet, l'invention a essentiellement pour objet un lecteur-analyseur de disques tachygraphiques, du genre comprenant un plateau entraîné en rotation et apte à recevoir un disque tachygraphique dont les inscriptions doivent être lues et analysées, ainsi que des moyens d'exploration de ces inscriptions, placés au-dessus du plateau, cet appareil étant équipé d'un bras de lecture mobile, déplaçable le long de moyens de guidage en direction tangentielle par rapport au plateau et muni d'un capteur apte à être positionné au-dessus de la piste circulaire ou de chaque piste circulaire du disque tachygraphique comportant des inscriptions devant être lues et analysées.

Avantageusement, les moyens de commande du déplacement tangentiel du bras de lecture sont agencés de manière à provoquer une avance rapide du bras suivie d'une avance lente, et des moyens sont en outre prévus pour commander une levée ou un abaissement du bras de lecture. Cette conception permet d'envisager un fonctionnement automatique, au cours duquel l'avance rapide du bras, maintenu en position levée, est d'abord provoquée de manière à approcher rapidement le capteur d'une piste circulaire dont la position est approximativement connue. Ensuite, le bras arrêté dans sa course d'avance est abaissé de manière à placer le capteur dans sa position d'exploration, au contact du disque ou à proximité immédiate de sa surface, et l'avance lente du bras prend automatiquement le relais jusqu'à ce que le capteur rencontre une première ligne ou zone sombre ; le repérage automatique de cette ligne ou zone par le capteur provoque l'arrêt du mouvement d'avance lente, de sorte que le capteur se trouve positionné sur la piste à explorer. L'exploration de cette piste peut alors être faite par une cellule optique unique, portée par le bras de lecture.

Dans une forme de réalisation particulière du lecteur-analyseur de disques tachygraphiques selon l'invention, celui-ci est piloté par un ordinateur et les circuits électriques de commande comprennent un contact pour la commande de l'avance rapide du bras de lecture directement excité par une sortie de l'ordinateur pendant une durée prédéterminée, un contact pour la commande des moyens de levée et d'abaissement du bras de lecture, commuté à la fin de la durée précitée, et un contact pour la commande de l'avance lente du bras de lecture, mis en action après abaissement de ce bras et jusqu'à ce que les moyens de repérage automatique détectent l'arrivée du capteur sur une ligne ou une zone sombre du disque. L'appareil est alors prêt pour l'exploration de la piste sur laquelle le capteur est parvenu et s'est automatiquement arrêté.

Un contact supplémentaire, dans les circuits électriques de commande, permet une remise en marche de l'avance lente du bras de lecture pendant une durée prédéterminée, après exploration complète d'une piste circulaire, en vue de positionner le capteur sur une autre piste à explorer sans relever le bras. La durée de l'avance lente du bras est évidemment sélectionnée en fonction de l'écart séparant, sur le type de disque utilisé, les deux pistes devant être successivement explorées.

Les contacts ici mentionnés ne sont pas obligatoirement mécaniques ; ils peuvent être aussi réalisés sous la forme de composants statiques, tels que transistors montés en "tout ou rien" (bloqués ou passants).

Pour pouvoir explorer une piste circulaire du disque tachygraphique précisément entre les instants "0 heure" et "24 heures" il est prévu, selon une autre caractéristique de l'invention, que le plateau tournant comporte d'une part des moyens pour positionner le disque dans une position angulaire invariable et déterminée relativement au plateau, et d'autre part, en correspondance avec la position angulaire "0 heure" du disque, un moyen lié au plateau et coopérant avec un détecteur fixe qui est sensible au passage dudit moyen et qui émet lors de ce passage un signal donnant un ordre de début ou de fin de comptage. Le moyen lié au plateau peut être un simple réflecteur, auquel cas le détecteur fixe est une cellule opto-électronique émetteur-récepteur. Le disque peut être aisément positionné au moyen d'une came prévue au centre du plateau et possédant un profil correspondant à l'ouverture centrale habituelle, non circulaire, des disques tachygraphiques.

Grâce aux signaux "0 heure" et "24 heures" émis par les moyens précédemment indiqués, l'exploration d'une piste sur un disque peut se faire aisément avec transmission et comptage d'impulsions d'horloge, donnant un enregistrement de l'étendue des zones claires ou sombres. Si le total des durées enregistrées n'est pas égal à 24 heures, la lecture est refusée et la piste est relue automatiquement jusqu'à validation. A cet effet, l'appareil comprend avantageusement des circuits de commande de comptage incluant une porte d'échange et de contrôle recevant des impulsions d'horloge délivrées par une base de temps, un signal spécifique des zones claires ou sombres du disque émis à partir du capteur du bras de lecture, et les signaux de passage aux positions "0 heure" ou "24 heures", ladite porte ne laissant passer les impulsions d'horloge vers des moyens de comptage que pour un état déterminé du signal spécifique des zones claires ou sombres, et ceci seulement durant l'intervalle de temps s'écoulant entre deux signaux successifs de passage aux positions "0 heure" et "24 heures".

Le transfert des impulsions d'horloge depuis la porte d'échange et de contrôle vers les moyens de comptage peut s'effectuer par l'intermédiaire d'une porte de passage, recevant un signal en provenance d'un compteur d'impulsions relié aux sorties de l'ordinateur, pour un blocage de sécurité après une durée prédéterminée, même en cas de défaillance du système de détection "0 heure" ou "24 heures".

Le contenu des compteurs est transféré à l'ordinateur, où il est regroupé et traité par celui-ci grâce à un logiciel approprié, pour fournir des états journaliers, hebdomadaires ou mensuels.

Tous les temps de déplacement du bras, de base de temps du signal d'horloge, d'intervalle entre les signaux "0 heure" et "24 heures", sont réglables et peuvent être modifiés à tout moment, et cela très simplement, par l'utilisateur.

De toute façon, l'invention sera mieux comprise à l'aide de la description qui suit, en référence au dessin schématique annexé représentant, à titre d'exemple non limitatif, une forme de réalisation de ce lecteur-analyseur de disques tachygraphiques :

Figure 1 est une vue générale, en perspective, d'un appareil conforme à la présente invention, montrant sa structure mécanique ;

Figure 2 est un schéma synoptique de cet appareil, notamment de ses circuits électroniques ;

Figure 3 montre le détail des circuits de commande de déplacement du bras de lecture ;

Figure 4 représente le système de repérage des positions de début et fin de comptage sur un disque tachygraphique, ainsi que les circuits de commande de comptage.

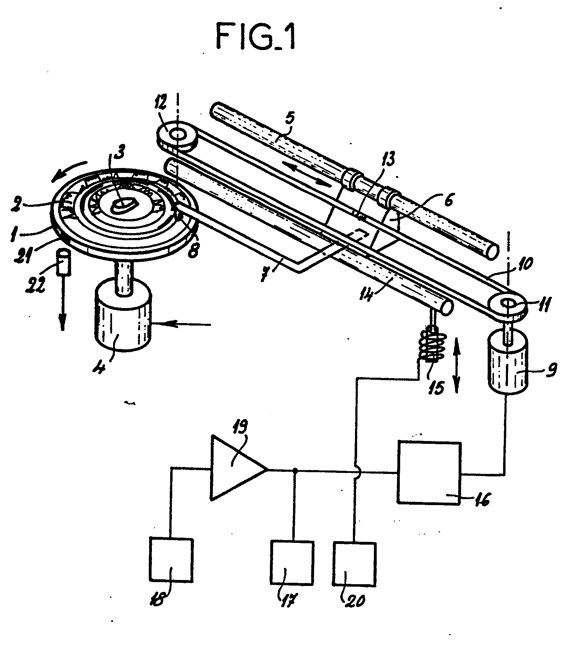

Le lecteur-analyseur représenté à la figure 1 comprend un plateau circulaire (1) monté tournant autour d'un axe vertical, et recevant le disque tachygraphique (2) dont les inscriptions doivent être lues et analysées. Une came (3), prévue au centre du plateau (1), permet le calage du disque (2) dans une position angulaire constante et prédéterminée relativement au plateau (1), en mettant à profit l'ouverture centrale de forme particulière de ce disque (2). Un moteur électrique (4) à effet Hall, accouplé à l'axe du plateau (1), assure l'entraînement en rotation de celui-ci à une vitesse angulaire très régulière.

Un guide fixe horizontal (5), de direction tangentielle par rapport au plateau (1), permet le déplacement en translation d'un chariot (6) qui supporte un bras de lecture (7) dont l'extrémité libre est munie d'une tête optique d'exploration (8). Un servo-moteur électrique (9), avec réducteur, permet de déplacer le chariot (6) le long du guide (5) par l'intermédiaire d'une courroie sans fin (10) qui passe sur une poulie motrice (11) et sur une poulie de renvoi (12), et qui est liée au chariot (6) en un point d'attache (13).

Le bras de lecture (7) repose et peut se déplacer sur un guide mobile (14), sensiblement parallèle au guide fixe (5) mais déplaçable dans un plan vertical au moyen d'un dispositif de levée électromagnétique (15). Ce dernier permet de maintenir le bras de lecture (7) à une certaine hauteur au-dessus du plateau (1), ou de l'abaisser de telle sorte que la tête optique (8) repose sur le disque (2).

Le servo-moteur électrique (9) qui déplace le chariot (6) est alimenté par l'intermédiaire d'un amplificateur (16). Ce servo-moteur (9) peut être mis en service à partir d'un premier contact (17) pour la commande d'avance rapide du bras de lecture (7) ; il peut aussi être mis en service à partir d'un deuxième contact (18), et par l'intermédiaire d'un préamplificateur (19), pour commander une avance lente du bras de lecture (7). Un troisième contact (20) commande la mise en action du dispositif de levée (15) du bras de lecture (7).

Ce bras (7) peut, par ailleurs, être écarté de sa position tangentielle de lecture par un mouvement de rotation, pour faciliter l'accès au plateau (1) en vue de la mise en place ou du retrait d'un disque (2), ceci d'une manière bien connue dans le domaine des platines de tourne-disques.

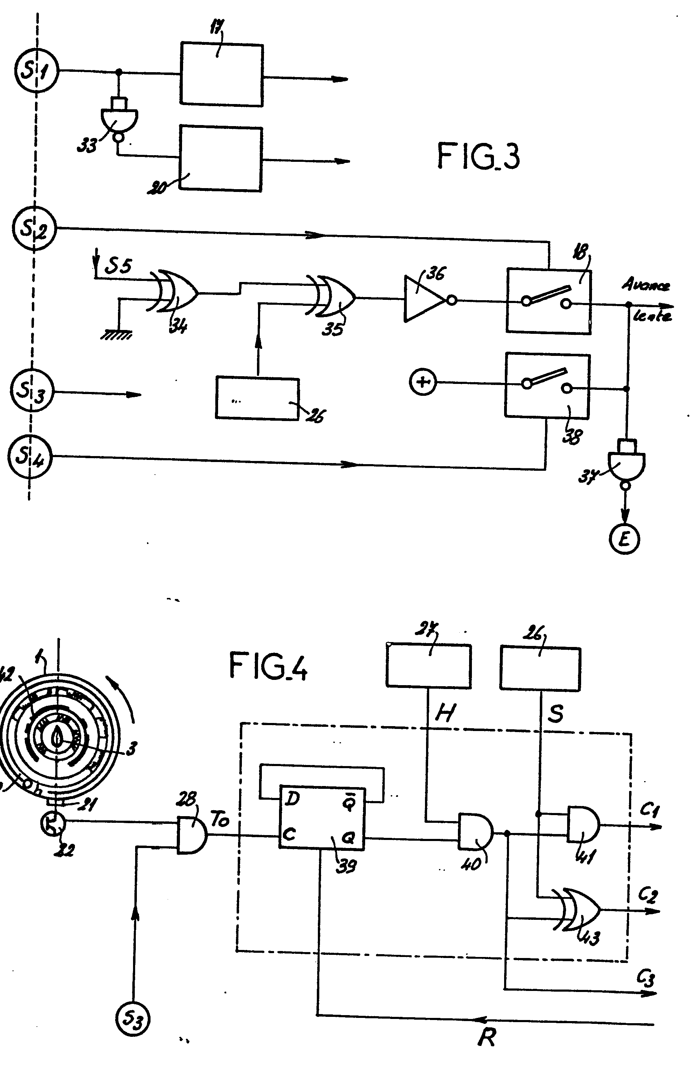

Au plateau (1) est associé un système de repérage, comprenant un ruban réflecteur (21) fixé à la périphérie dudit plateau (1) dans le prolongement de la ligne formant axe de symétrie de la came (3), et correspondant à l'instant "0 heure" d'un disque tachygraphique (2) correctement positionné sur le plateau (1) à l'aide de cette came (3). Sur le bâti de l'appareil est fixée une cellule opto-électronique émetteur-récepteur (22), la détection se faisant par réflexion lors du passage du ruban (21) devant ladite cellule (22) - voir aussi figure 4.

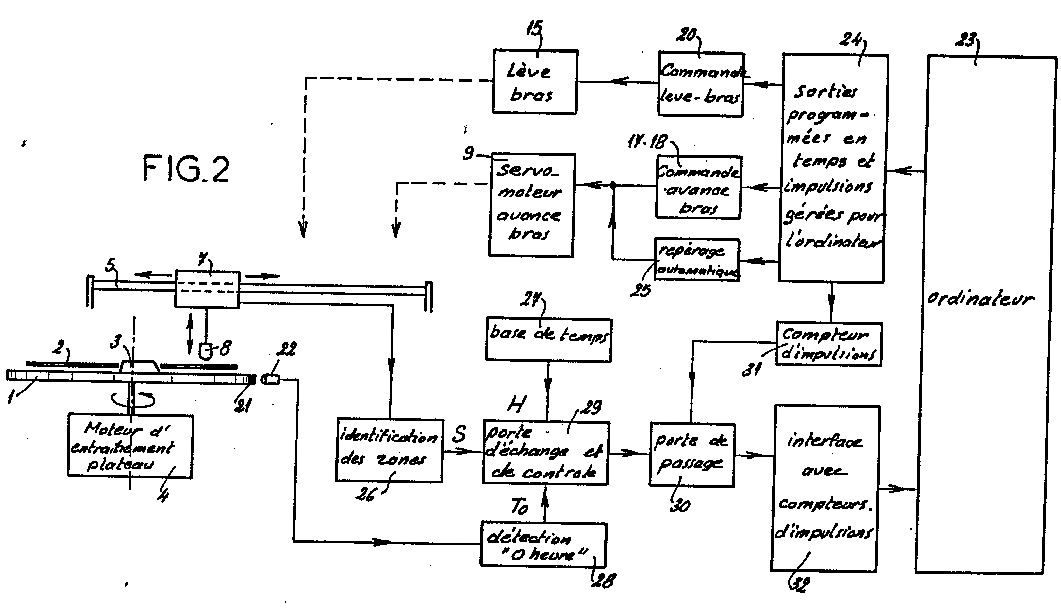

La plupart des composants précédemment mentionnés sont aussi indiqués très schématiquement sur la figure 2, qui donne en outre le schéma de principe de la partie électronique de l'appareil.

Celui-ci est piloté par un ordinateur (23), qui émet des ordres destinés aux circuits spécifiques de l'appareil par l'intermédiaire de sorties (24) programmées en temps et impulsions gérées par l'ordinateur (23). Les sorties (24) commandent les trois contacts (17,18,20) correspondant respectivement à l'avance rapide, à l'avance lente et à la levée du bras de lecture (7), ainsi qu'un système de repérage automatique (25), pour obtenir le fonctionnement d'ensemble suivant, un disque (2) étant supposé mis en place sur le plateau (1) :

- Le bras de lecture (7) est d'abord avancé de manière rapide vers la région du disque (2) comportant les inscriptions à lire et analyser, le servo-moteur (9) étant commandé à partir du premier contact (17) pendant une durée prédéterminée, correspondant à une course amenant la tête optique (8) à une assez faible distance desdites inscriptions.

- A la fin de ce mouvement d'avance rapide, le bras de lecture (7) est abaissé au moyen du dispositif de levée (15), commandé à partir du troisième contact (20), de sorte que la tête optique (8) vient reposer sur le disque (2).

- Ensuite, le deuxième contact (18) intervient pour commander un mouvement d'avance lente du bras de lecture (7), ce mouvement étant interrompu par le système de repérage automatique (25) lorsque la tête optique (8) détecte une ligne ou une zone sombre sur le disque tachygraphique (2). L'appareil se trouve alors prêt à commencer une première lecture, sur un tour, des inscriptions portées par ce disque (2).

Le plateau (1) avec le disque (2) étant entraîné en rotation par le moteur (4), la tête optique (8) est sensible à la présence ou à l'absence d'une couleur sombre dans la zone qu'elle balaye à chaque instant, et un circuit (26) d'identification des zones claires ou sombres fournit un signal spécifique (S). Une base de temps (27) délivre en permanence des impulsions (H) de fréquence déterminée. Un circuit (28), relié au détecteur opto-électronique (22), délivre un signal (To) lors du premier passage du ruban réflecteur (21) devant ce détecteur (22), après amenée du bras (7) dans sa position de lecture.

Une porte d'échange et de contrôle (29), recevant les différents signaux (S,H,To), permet après réception du signal (To), correspondant à l'instant "0 heure" du disque (2), le passage des impulsions (H) issues de la base de temps (27) vers les moyens de comptage. Dès que le signal (To) suivant, identique au précédent, est émis par le circuit (28), donc après une rotation complète du disque (2) correspondant à une durée de 24 heures, le comptage est interrompu.

Les impulsions issues de la porte d'échange et de contrôle (29) transitent par une porte de passage (30), recevant aussi un signal en provenance d'un compteur d'impulsions (31) relié aux sorties (24) de l'ordinateur (23). Ces dispositions permettent de bloquer dans tous les cas la transmission des impulsions après une certaine durée, même si le second signal (To) est anormalement retardé, et elles ont uniquement une fonction de sécurité.

Les impulsions transitant par la porte (30) sont transmises à une carte d'interface d'entrée (32) de l'ordinateur (23), comportant des compteurs d'impulsions. A partir des informations délivrées par ces compteurs, l'ordinateur (23) effectue les traitements permis par son logiciel.

En se référant aux figures 3 et 4, on décrira maintenant de façon plus détaillée certains circuits de l'appareil et leur fonctionnement :

La figure 3 montre les circuits logiques de commande de déplacement du bras de lecture, recevant des signaux temporisés de diverses sorties (S1,S2,...) de l'interface de l'ordinateur.

Une première sortie (S1) est directement reliée au contact (17) de commande de l'avance rapide du bras de lecture, réalisé sous la forme d'un interrupteur C-MOS. La sortie (S1) est aussi reliée, par l'intermédiaire d'un inverseur (33), au contact (20) de commande de levée du bras de lecture, également réalisé sous la forme d'un interrupteur C-MOS. Un état haut, présent à cette sortie (S1) durant un temps déterminé en fonction du disque tachygraphique à lire et à analyser, provoque l'avance rapide du bras ; dès que la sortie (S1) revient à l'état bas, l'interrupteur (20) est commuté et donne l'ordre d'abaissement du bras de lecture. La tête optique, alors proche de la piste à lire et analyser, est posée sur le disque.

Une autre sortie (S2) a, jusque là, bloqué le troisième contact (18), également réalisé sous la forme d'un interrupteur C-MOS, et cela dès le début des opérations. Cet interrupteur (18) est alors débloqué pour permettre l'avance lente du bras de lecture, pour qu'il puisse chercher la piste à lire et analyser, et se positionner exactement sur cette piste. Deux portes OU-exclusif (34,35) fournissent des informations pour autoriser et contrôler l'avance lente. La porte OU (34) transmet un signal (S5) qui indique que le bras se trouve bien en position abaissée. La porte OU (35) recevant un signal du circuit (26) d'identification des zones claires ou sombres détectées par la tête optique, commande l'avance lente par l'intermédiaire d'un inverseur (36), aussi longtemps qu'elle n'a pas reçu un ordre d'arrêt émis par le circuit (26) lorsque la tête optique rencontre une zone sombre, donc jusqu'à ce qu'elle "trouve" la piste à lire et analyser sur le disque.

A cet instant, une porte NON-ET (37) reliée à une entrée (E) de l'interface de l'ordinateur fait déclencher l'interrupteur (18), donc arrête toute avance du bras de lecture, et fait simultanément apparaître sur une sortie (S3) un état haut autorisant la détection "0 heure" puis le comptage d'impulsions (voir plus bas la description de détail donnée en référence à la figure 4).

Dès que l'opération de comptage est terminée, la sortie (S3) revient à l'état bas pour interdire tout comptage, et la suite du programme est demandée. Il peut s'agir soit de la fin de la lecture et de l'analyse d'un disque, auquel cas l'ordinateur réaffiche le menu "disque" pour la saisie d'un autre disque selon le même processus, soit de la lecture et de l'analyse d'une deuxième piste sur le même disque.

Dans le cas de la lecture d'une deuxième piste, une sortie (S4) fournit un signal durant un temps prédéterminé, pour maintenir bloqué un quatrième interrupteur (38) de type C-MOS, lequel commande directement l'avance lente du bras. Ce dernier est ainsi déplacé vers la deuxième piste. De la même manière que précédemment, dès que l'entrée (E) fournit un signal indiquant la fin de l'avance lente du bras, la sortie (S3) repasse à l'état haut pour autoriser de nouveau le comptage. Le même processus peut se reproduire, s'il y a encore une troisième piste à lire et à analyser.

Comme montré sur la figure 4, une porte ET (28), recevant à ses entrées d'une part le signal fourni par le détecteur opto-électronique (22), d'autre part l'état de la sortie (S3), constitue le circuit de détection "0 heure" qui délivre le signal (To) envoyé à la porte d'échange et de contrôle (29). Celle-ci comprend une bascule de type D (39), dont l'état est changé par le signal (To). La sortie de la bascule (39) est reliée à une entrée d'une porte ET (40), dont l'autre entrée reçoit les impulsions (H) fournies par la base de temps (27). La porte ET (40) laisse passer ces impulsions après émission du signal (To), et elle les envoie à une entrée d'une porte ET (41), dont l'autre entrée reçoit le signal (S) délivré par le circuit (26) d'identification des zones claires ou sombres. La détection d'une zone sombre (42) par la tête optique du bras de lecture provoque le passage des impulsions, au travers de la porte ET (41), vers un premier compteur d'impulsions (C1) de la carte d'interface d'entrée de l'ordinateur.

Si la tête optique détecte au contraire une zone claire, les impulsions (H) issues de la base de temps (27) sont transmises, au travers d'une porte OU-exclusif (43), à un deuxième compteur d'impulsions (C2).

Enfin un troisième compteur (C3) cumule la totalité des impulsions, que celles-ci soient orientées vers le compteur (C1) ou vers le compteur (C2), dans un but de contrôle. Dès que le compteur (C3) aura compté un nombre total d'impulsions correspondant normalement à une durée de 24 heures, un signal de retour (R) sera émis et amené à la bascule (39), pour arrêter les saisies d'informations.

Dans une variante, non représentée au dessin, la bascule de type D (39) est remplacée par un interrupteur C-MOS, et la porte ET (28) envoie son signal de sortie à une entrée de l'ordinateur, qui tiendra à l'état haut une sortie commandant l'interrupteur C-MOS ; cette variante permet de reporter certaines fonctions sur l'ordinateur et simplifie la porte d'échange et de contrôle (29). Une autre possibilité consiste à assurer par l'ordinateur, avec un logiciel approprié, toutes les fonctions logiques et de comptage, ce qui supprime des composants de "logique câblée", non adaptables, et permet d'avoir des fonctions plus simples et surtout très vite modifiables, par exemple pour s'adapter à la lecture de disques différents de ceux utilisés à l'heure actuelle, sans modification au niveau du matériel.

# REVENDICATIONS

1. Lecteur-analyseur de disques tachygraphiques, comprenant un plateau (1) entraîné en rotation et apte à recevoir un disque tachygraphique (2) dont les inscriptions doivent être lues et analysées, ainsi que des moyens d'exploration de ces inscriptions, placés au-dessus du plateau, caractérisé en ce qu'il est équipé d'un bras de lecture mobile (7), déplaçable le long de moyens de guidage (5,14) en direction tangentielle par rapport au plateau (1) et muni d'un capteur (8) apte à être positionné au-dessus de la piste circulaire ou de chaque piste circulaire du disque tachygraphique (2) comportant des inscriptions devant être lues et analysées.

2. Lecteur-analyseur de disques tachygraphiques selon la revendication 1, caractérisé en ce que les moyens de commande du déplacement tangentiel du bras de lecture (7) sont agencés de manière à provoquer une avance rapide du bras (7) suivie d'une avance lente, et en ce que des moyens (15) sont en outre prévus pour commander une levée ou un abaissement du bras de lecture (7).

3. Lecteur-analyseur de disques tachygraphiques selon la revendication 2, caractérisé en ce que des moyens (25) sont prévus pour un repérage automatique de la première ligne ou zone sombre rencontrée par le capteur (8) après abaissement du bras de lecture (7) et mise en avance lente de celui-ci, et pour un arrêt du mouvement d'avance lente du bras (7) au moment de ce repérage.

4. Lecteur-analyseur de disques tachygraphiques selon la revendication 3, caractérisé en ce qu'il est piloté par un ordinateur (23) et en ce que ses circuits électriques de commande comprennent un contact (17) pour la commande de l'avance rapide du bras de lecture (7), directement excité par une sortie (S1) de l'ordinateur (23), pendant une durée prédéterminée, un contact (20) pour la commande des moyens (15) de levée et d'abaissement du bras de lecture (7), commuté à la fin de la durée précitée, et un contact (18) pour la commande de l'avance lente du bras de lecture (7), mis en action après abaissement de ce bras et jusqu'à ce que les moyens de repérage automatique (25) détectent l'arrivée du capteur (8) sur une ligne ou zone sombre du disque (2).

5. Lecteur-analyseur de disques tachygraphiques selon la revendication 4, caractérisé en ce que les circuits électroniques de commande comprennent un contact supplémentaire (3S) pour une remise en marche de l'avance lente du bras de lecture (7) pendant une durée prédéterminée, après exploration complète d'une piste circulaire, en vue de positionner le capteur (8) sur une autre piste à explorer.

6. Lecteur-analyseur de disques tachygraphiques selon l'une quelconque des revendications 1 à 5, caractérisé en ce que le plateau tournant (1) comporte d'une part des moyens (3) pour positionner le disque tachygraphique (2) dans une position angulaire invariable et déterminée relativement au plateau (1), et d'autre part, en correspondance avec la position angulaire "0 heure" du disque (2), un moyen (21) lié au plateau (1) et coopérant avec un détecteur fixe (22) qui est sensible au passage dudit moyen (21) et qui émet lors de ce passage un signal (To) donnant un ordre de début ou de fin de comptage.

7. Lecteur-analyseur de disques tachygraphiques selon la revendication 6, caractérisé en ce que les moyens pour positionner le disque tachygraphique (2) dans une position angulaire invariable et déterminée relativement au plateau (1) sont constitués par une came (3) prévue au centre du plateau (1) et possédant un profil correspondant à l'ouverture centrale habituelle, non circulaire, des disques tachygraphiques.

8. Lecteur-analyseur de disques tachygraphiques selon la revendication 6 ou 7, caractérisé en ce que le moyen lié au plateau (1), en correspondance avec la position "0 heure" du disque (2), est un réflecteur (21), tandis que le détecteur fixe associé est un détecteur opto-électronique émetteur-récepteur (22).

9. Lecteur-analyseur de disques tachygraphiques selon l'une quelconque des revendications 6 à 8, caractérisé en ce qu'il comprend des circuits de commande de comptage incluant une porte d'échange et de contrôle (29) recevant des impulsions d'horloge (H) délivrées par une base de temps (27), un signal (S) spécifique des zones claires ou sombres du disque (2) émis à partir du capteur (8) du bras de lecture (7), et les signaux (To) de passage aux positions "0 heure" ou "24 heures", ladite porte (29) ne laissant passer les impulsions d'horloge (H) vers des moyens de comptage (32) que pour un état déterminé du signal (S) spécifique des zones claires ou sombres, et ceci seulement durant l'intervalle de temps s'écoulant entre deux signaux successifs (To) de passage aux positions "0 heure" ou "24 heures".

10. Lecteur-analyseur de disques tachygraphiques selon la revendication 9, caractérisé en ce que le transfert des impulsions d'horloge (H) depuis la porte d'échange et de contrôle (29) vers les moyens de comptage (32) s'effectue par l'intermédiaire d'une porte de passage (30), recevant un signal en provenance d'un compteur d'impulsions (31) relié aux sorties (24) de l'ordinateur (23), pour un blocage de sécurité après une durée prédéterminée.

# FIG.1

0176449

FIG.2

0176449

FIG.3

FIG.4

**Office européen des brevets**

# RAPPORT DE RECHERCHE EUROPEENNE

EP 85 42 0147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 055 159 (KIENZLE)<br><br>* Page 2, ligne 12 - page 3, ligne 19; page 5, ligne 4 - page 6, ligne 6; page 12, ligne 36 - page 13, ligne 41; figures * | 1-3,6, 7 | G 07 C 5/00<br>G 06 K 11/00 |
| | --- | | |
| A | US-A-3 829 660 (H. RUHL)<br>* Colonne 2, lignes 14-60; revendication 1; figure 1 * | 1 | |
| | --- | | |
| A | FR-A-2 305 799 (SMITHS INDUSTRIES)<br>* Page 6, ligne 25 - page 7, ligne 35; figures * | 1 | |
| | --- | | |
| A | DE-B-1 217 111 (TELEFUNKEN)<br>* Colonne 1, lignes 22-43; colonne 3, lignes 25-50; figures * | 1 | DOMAINES TECHNIQUES RECHERCHES (Int. Cl.4) |
| | --- | | G 07 C |
| A | US-A-3 403 445 (V.B. SAUER)<br>* Abrégé; figures * | 1 | G 06 K<br>G 01 D |
| | --- | | |
| A | US-A-3 809 909 (S. SALET et al.)<br>* Colonne 2, ligne 43 - colonne 4, ligne 46; figures * | 1 | |
| | --- | | |
| A | FR-A-2 251 868 (TVI-TELEVISION INDUSTRIELLE) | | |
| | --- -/- | | |

Le présent rapport de recherche a été établi pour toutes les revendications

| Lieu de la recherche<br>LA HAYE | Date d'achèvement de la recherche<br>22-11-1985 | Examinateur<br>MEYL D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

**Office européen des brevets**

**RAPPORT DE RECHERCHE EUROPEENNE**

| DOCUMENTS CONSIDERES COMME PERTINENTS | | | Page 2 | |
|---|---|---|---|---|
| Catégorie | Citation du document avec indication, en cas de besoin, des parties pertinentes | Revendication concernée | CLASSEMENT DE LA DEMANDE (Int. Cl.4) | |
| A | FR-A-2 124 977 (KIENZLE) | | | |
| | ----- | | DOMAINES TECHNIQUES RECHERCHES (Int. Cl.4) | |
| Le présent rapport de recherche a été établi pour toutes les revendications | | | | |
| Lieu de la recherche LA HAYE | Date d'achèvement de la recherche 22-11-1985 | | Examinateur MEYL D. | |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82